# EUROPEAN PATENT SPECIFICATION

(11) **EP 3 553 026 B1**
(45) Date of publication and mention of the grant of the patent: **28.10.2026**
(21) Application number: 17880329.2
(22) Date of filing: 27.11.2017
(51) Int. Cl.: C01B 39/02, B01J 29/76, B01D 53/94, C01B 39/48

(54) **METHOD FOR PREPARING ZEOLITE USING BENZYL GROUP-BEARING STRUCTURE DIRECTING AGENT**
VERFAHREN ZUR HERSTELLUNG VON ZEOLITH MITHILFE VON BENZYLGRUPPEHALTIGEM STRUKTURAUSRICHTUNGSMITTEL
MÉTHODE DE PRÉPARATION DE ZÉOLITE À L'AIDE D'UN AGENT D'ORIENTATION DE STRUCTURE PORTEUSE DE GROUPES BENZYLE

(30) Priority: 12.12.2016 KR 20160168865
(43) Date of publication of application: 16.10.2019
(73) Proprietor: Industry Foundation of Chonnam National University, Gwangju 61186 (KR); Korea University Research and Business Foundation, Seoul 02841 (KR)
(72) Inventor: CHO, Sung June, Gwangju 61033 (KR); LEE, Kwan Young, Seoul 02841 (KR); PARK, Soon Hee, Gwangju 62283 (KR); LEE, Seung Gwan, Damyang-gun Jeollanam-do 57343 (KR)
(74) Representative: Macquet, Christophe
(86) International application number: PCT/KR2017/013620
(87) International publication number: WO 2018/110860

(56) References cited:
- KR-A- 20090 123 978
- US-A- 3 699 139
- MASAYA ITAKURA ET AL: "Synthesis of high-silica CHA type zeolite by interzeolite conversion of FAU type zeolite in the presence of seed crystals", MICROPOROUS AND MESOPOROUS MATERIALS, ELSEVIER, AMSTERDAM, NL, vol. 144, no. 1, 24 March 2011 (2011-03-24), pages 91 - 96, XP028100122, ISSN: 1387-1811, [retrieved on 20110331], DOI: 10.1016/J.MICROMESO.2011.03.041
- YAMANAKA, NAOKI ET AL.: "Effect of Structure-directing Agents on FAU-CHA Interzeolite Conversion and Preparation of High Pervaporation Performance CHA Zeolite Membranes for the Dehydration of Acetic Acid Solution", BULLETIN OF THE CHEMICAL SOCIETY OF JAPAN, vol. 86, no. 11, 2013, pages 1333 - 1340, XP009515139
- ITAKURA, MASAYA ET AL.: "Synthesis of High-silica CHA Zeolite from FAU Zeolite in the Presence of Benzyltrimethylammonium Hydroxide", CHEMISTRY LETTERS, vol. 37, no. 9, 2008, pages 908 - 909, XP055250258
- MARTIN, NURIA ET AL.: "High Yield Synthesis of High-silica Chabazite by Combining the Role of Zeolite Precursors and Tetraethylammonium: SCR of NOx", CHEMICAL COMMUNICATIONS, vol. 51, no. 49, 2015, pages 9965 - 9968, XP055249886
- INOUE, TAKAYUKI ET AL.: "Synthesis of LEV Zeolite by Interzeolite Conversion Method and Its Catalytic Performance in Ethanol to Olefins Reaction", MICROPOROUS AND MESOPOROUS MATERIALS, vol. 122, no. 1-3, 2009, pages 149 - 154, XP026054031

## Description

### [Technical Field]

The present invention is related to method of synthesizing zeolite using structure directing agent containing a benzyl group more particularly zeolite synthesized by using structure directing agent containing a benzyl group, which can obtain effects such as reduction of raw material cost and reduction of processing cost by using a structure directing agent containing a benzyl group.

### [Background Art]

Zeolite is a three-dimensional aluminosilicate mineral with regularly distributed pores capable of molecular access, and was first discovered by the Swedish mineralogist Crönsted. When he heated the natural zeolite ore, he observed the boiling phenomenon by bubbling and named it "zeolite" which means "boiling stone".

The zeolite is usually filled with water molecules in the nanosized pores. The zeolite desorbs the water molecules from the pores without causing any substantial change in the structure of the zeolite by heating or decompression, and absorbs again water molecules when the zeolite is left in the air. Because of specific characteristics, the zeolite has become the subject of research by mineralogists and chemists.

The general structure of zeolite is that tetrahedral units consisting of SiO₄⁴⁻ and AlO₄⁵⁻ are connected through oxygen cross-linking. In this structure, Si has a +4 formal charge, but Al has only +3 formal charge, so it accommodates one negative charge everywhere there is Al. Therefore, there are cations for charge compensation, the cations are inside the pores, and the remaining spaces are usually filled with water molecules.

Zeolite has adsorbability and ion exchange ability due to its unique crystal structure, and has industrially useful physicochemical properties. The zeolite has the best cation exchange capacity among minerals and exhibits selective cation exchange characteristics depending on the type of zeolite. Since the Si constituting the zeolite structure has +4 formal charge and Al has +3 formal charge, cation is needed to neutralize the charge difference caused by Al. Because cations are not fixed at specific sites and charged near negative charge in the zeolite structure, the cations may be exchanged with other cations. For example, when a zeolite having A⁺ cation is putted into an aqueous solution having B⁺ cation, the A⁺ cation is introduced into the aqueous solution and B⁺ cation enters the zeolite. As described above, the phenomenon that the cations contained in the zeolite and the cations contained in the solution are mutually exchanged is referred to as a cation exchange. The cation exchange of the zeolite is influenced by the kind of cations, size and charge quantity of cations, temperature of the cation exchange, kind of anion affection the cation in the solution, and the structural characteristics of the zeolite. MASAYA ITAKURA ET AL, MICROPOROUS AND MESOPOROUS MATERIALS, ELSEVIER, AMSTERDAM, NL, vol. 144, no. 1, 24 March 2011 (2011-03-24) pages 91-96, and US3699139A describe methods of synthesizing a zeolite comprising preparing a hydrogel having a structure directing agent in form of benzyltrimethylammonium hydroxide.

Recently, zeolite impregnated with Cu has attracted attention as a catalyst for selective reduction of nitrogen oxides in exhaust gas of automobiles. However, in order to be industrially used, it is necessary to have sufficient ion exchange capacity or solid acidity, and to have durability as an adsorbent or a catalyst carrier.

For example, when the conventional zeolite is used as adsorbent or a catalyst support, durability and thermal resistance are lowered, and the zeolite structure is destroyed during hydrothermal treatment.

Accordingly, there is a need for a novel zeolite synthesizing method and a zeolite produced therefrom that overcomes the problem of destroying the zeolite structure in the hydrothermal treatment process.

### [Disclosure]

### [Technical Problem]

The aspect of the present invention is to provide a method for synthesizing zeolite by using a structure directing agent containing a benzyl group.

### [Technical Solution]

One aspect of the present invention provides a method for synthesizing zeolite by using a structure directing agent containing a benzyl group. The method comprises preparing a hydrogel having a first structure directing agent containing a benzyl group, a zeolite raw material, a basic material and distilled water, and hydrothermally synthesizing the hydrogel, wherein the zeolite raw material comprises alumina and silica source, and the first structure directing agent containing the benzyl group is selected from the group consisting of hydroxides, halides, carbonates and sulphates which have benzyltrimethylammonium ion, benzyltriethylammonium ion, benzyltripropylammonium ion or benzyltributylammonium ion as cations.

The hydrogel comprises a second structure directing agent, wherein the second structure directing agent comprises at least one selected from the group consisting of hydroxides, halides, carbonates and sulphates including a cation having the following formula, 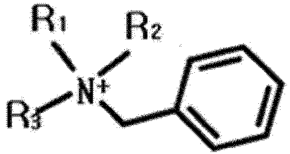 wherein R₁ is one selected from the group consisting of alkyl of C₁ to C₄, R₂ is one selected from the group consisting of alkyl of C₁ to C₄, and R₃ is one selected from the group consisting of alkyl of C₈ to C₂₀.

The zeolite synthesized by using the hydrogel containing the second structure directing agent has an average particle size of 0.2 µm to 1.0 µm.

According to one embodiment, the zeolite raw material may have a SiO₂/Al₂O₃ molar ratio of 5 to 600 and the synthesized zeolite may be in the type of SSZ-13 (Standard Oil Synthetic Zeolite-13).

According to one embodiment, the synthesized zeolite may be the type of BEA (Zeolite Beta) using the zeolite raw material with a SiO₂/Al₂O₃ molar ratio of 490 to 510.

According to one embodiment, the hydrogel may further comprise compound including sulfate ion.

### [Advantageous Effects]

According to the present invention, effects such as reduction of raw material cost and reduction of processing cost can be obtained by using the structure directing agent containing a benzyl group.

Furthermore, because the first structure directing agent and the second structure directing agent are used, zeolite having excellent hydrothermal stability can be synthesized, so that zeolite structure can be retained even after hydrothermal treatment at a high temperature and selective catalytic reduction activity can be enhanced.

Furthermore, by additionally using a structure directing agent containing a benzyl group having an alkyl group of C₈ to C₂₀, it is possible to synthesize a zeolite having micropores and mesopores at the same time, thereby can facilitate diffusion of the reactant such that the zeolite may be applied to various catalysis reaction.

Further, by adding sulfate ions to the zeolite synthetic mixture, the hydrothermal reaction rate becomes faster, the zeolite synthesis time is shortened, and the effect of shortening the process time can be obtained.

In addition, a zeolite having a desired structure can be produced according to the SiO₂/Al₂O₃ molar ratio of the raw material as alumina and silica source.

Furthermore, it is possible to synthesize a zeolite having a desired structure by changing the SiO₂/Al₂O₃ molar ratio of the raw material as alumina and silica source.

Effects of the present invention are not limited to the above-described effects and other unmentioned effects may be clearly understood by those skilled in the art from the following descriptions.

### [Description of Drawings]

FIG. 1 is flow chart illustrating a method for synthesizing zeolite by using a structure directing agent containing a benzyl group according to a preferred embodiment of the present invention.
FIG. 2 shows XRD patterns and ²⁹Si NMR spectra of the zeolite prepared in Production Example 1 and the Comparative Example.
FIG. 3 is SEM images of the zeolite produced in Production Example 1, Example 4 and Comparative Example.
FIG. 4 is XRD patterns of the zeolite obtained in Production Example 1, Production Example 2, Production Example 3, Production Example 4 and Production Example 5.
FIG. 5 is an XRD pattern and an SEM image of the zeolite synthesized in Production Example 6.
FIG. 6 is XRD patterns of copper-loaded zeolite prepared by supporting copper on the zeolite of Comparative Example and Production Example 1, respectively.
FIG. 7 shows images of the copper-loaded zeolite prepared by supporting copper on the zeolite of Comparative Example and Production Example 1, respectively, after hydrothermal aging.
FIG. 8 is graphs showing the SCR reaction activity of copper-loaded zeolites prepared by supporting copper on the zeolites of Comparative Example and Production Example 1, respectively.

### [Modes of the Invention]

Hereinafter, embodiments of the present invention will be described in detail with reference to the accompanying drawings.

While the present invention is susceptible to various modifications and alternative forms, specific embodiments thereof are shown by way of example in the drawings and will herein be described in detail.

When an element such as a layer, a region, and a substrate is referred to as being disposed "on" another element, it should be understood that the element may be directly formed on the other element or an intervening element may be interposed therebetween.

It should be understood that, although the terms "first," "second," etc. may be used herein to describe various elements, components, areas, layers, and/or regions, these elements, components, areas, layers, and/or regions are not limited by these terms.

### EMBODIMENT

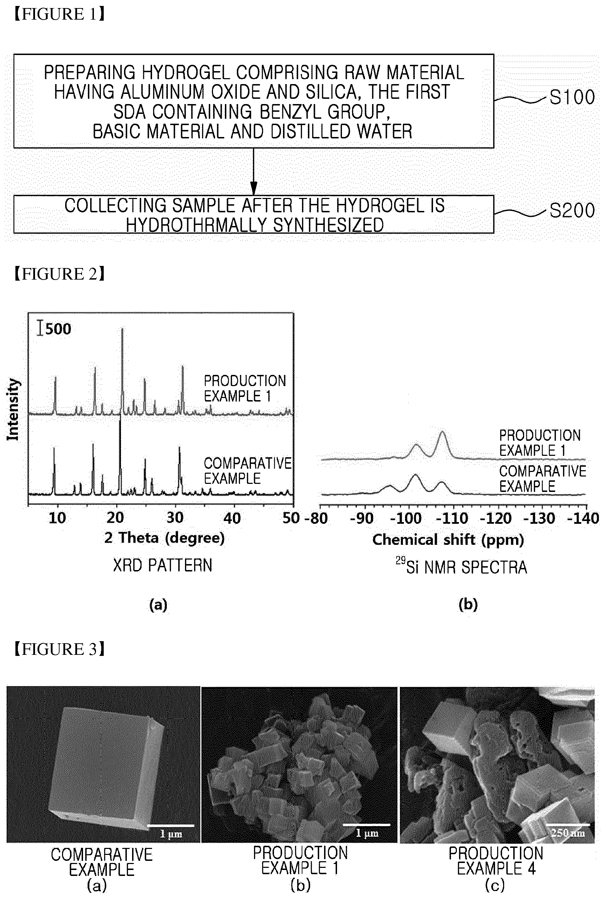

FIG. 1 is flow chart illustrating a method for synthesizing zeolite by using a structure directing agent containing a benzyl group according to a preferred embodiment of the present invention.

Referring to FIG. 1, the method of synthesizing zeolite by using the structure directing agent containing a benzyl group according to the present invention comprises two steps.

First, a hydrogel is prepared (S100).

Specifically, the hydrogel includes a raw material as alumina and silica source, a first structure directing agent (SDA) containing a benzyl group, a basic material and distilled water.

The zeolite raw material as alumina and silica source may be a raw material such as Y zeolite or ultra stable Y zeolite (USY zeolite) type.

According to the SiO₂/Al₂O₃ molar ratio of the zeolite raw material as alumina and silica source, the type of the zeolite using the structure directing agent containing the benzyl group prepared in the present invention may be changed and a zeolite having a desired structure may be synthesized.

A first form of the zeolite using structure directing agent containing benzyl group is SSZ-13 (Standard Oil Synthetic Zeolite-13), and may be synthesized in case the SiO₂/Al₂O₃ molar ratio of the zeolite raw material is 5 to 600. In one embodiment, USY zeolite with a SiO₂/Al₂O₃ molar ratio of 30 is used in the present invention.

When the SiO₂/Al₂O₃ molar ratio of the zeolite raw material is in the range of 5 to 80, zeolite having excellent hydrothermal stability, which is the object of the present invention, can be obtained.

The second type of the zeolite using the structure directing agent containing the benzyl group is the type of BEA (Zeolite Beta), and may be synthesized in case the SiO₂/Al₂O₃ molar ratio of the zeolite raw material is in the range of 490 to 510, which is a specific range. In one embodiment, USY zeolite with a SiO₂/Al₂O₃ molar ratio of 500 is used in the present invention.

The first structure directing agent (SDA) has at least one compound selected from the group consisting of hydroxide, halide, carbonate and sulphate which have benzyltrimethylammonium ion, benzyltriethylammonium ion, benzyltripropylammonium ion or benzyltributylammonium ion as cations.

For example, the first SDA has at least one selected from the group consisting of benzyltrimethylammonium hydroxide, benzyltriethylammonium hydroxide, benzyltripropylammonium hydroxide, benzyltributylammonium hydroxide, benzyltrimethylammonium halide, benzyltriethylammonium halide, benzyltripropylammonium halide, and benzyltributylammonium halide.

By using the SDA containing the above described benzyl group without using the conventional adamantane series as SDA, it is possible to obtain effects such as reduction of raw material cost and reduction of processing cost.

The basic substance is a material for making a basic aqueous solution by mixing with the distilled water, and any basic substance which does not cause compatibility problem with the hydrogel can be used. For example, NaOH can be used as basic substance.

The hydrogel further comprises a second SDA to form the mesopores of the zeolite using the SDA containing the benzyl group of the present invention.

Wherein the second SDA has at least one compound selected from the group consisting of hydroxides, halides, carbonates and sulfates having a cation of the chemical formula 1.

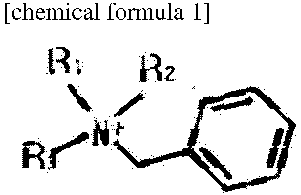

In the chemical formula 1, R₁ and R₂ may be at least any one of a methyl group, an ethyl group, a propyl group, and a butyl group, and R₃ may be one selected from the group consisting of alkyl groups having 8 to 20 carbon atoms. Preferably, benzyl dimethyl hexadecyl ammonium halide may be used as the second SDA.

As described above, according to further using the second SDA containing a benzyl group having an alkyl group of 8 to 20 carbon atoms, a zeolite simultaneously having both micropores and mesopores can be produced, thereby can facilitate diffusion of the reactant such that the zeolite may be used in various catalysis reaction.

After the hydrogel is prepared, hydrothermal synthesis of the hydrogel is performed (S200).

The hydrothermal synthesis is performed by using a conventional hydrothermal synthesis process, preferably hydrothermal synthesis at 140 °C for 4 days to 10 days under rotation of 20 rpm to 60 rpm.

On the other hand, if the hydrogel further contains a compound having sulfate ion in the step of preparing a hydrogel (S100), the hydrothermal reaction rate is increased and the zeolite synthesis time is shortened and the effect of shortening the process time can be obtained.

In one embodiment, Na₂SO₄ is used as the compound having the sulfate ion, thereby the hydrothermal synthesis process is shortened to 1 day to 4 days.

According to another embodiment of the present invention, there is provided a zeolite using a SDA containing a benzyl group synthesized by the above described synthesizing method.

The zeolite using the SDA containing a benzyl group according to this embodiment has a Si/Al molar ratio of 10 to 100 and an aluminum content is low, which has excellent hydrothermal stability. Therefore, the zeolite does not undergo structural change even the hydrothermal process over 750 °C.

The zeolite may have micropores and have an average particle size of 0.2 µm to 0.5 µm. When the second SDA is further used in the synthesis of the zeolite, a zeolite having an average particle size of 0.2 µm to 1.0 µm and simultaneously having micropores and mesopores can be obtained.

On the other hand, copper-loaded SSZ-13 zeolite (Cu-SSZ-13) can be manufactured through the step of supporting copper on the zeolite. Cu-SSZ-13 is known as a zeolite used for a reduction catalyst of nitrogen oxides, particularly a selective catalytic reduction (SCR) using ammonia as a reducing agent.

Because the zeolite of present invention does not occur the structural change after hydrothermal treatment above 750 °C, the copper-loaded SSZ-13 zeolites (Cu-SSZ-13) can be manufactured and used as an SCR catalyst at a temperature over 750 °C.

Hereinafter, examples of the present invention will be described in order to facilitate understanding of the present invention. It should be noted, however, that the following experiments are intended to assist the understanding of the present invention, and the scope of the present invention is not limited by the following experimental examples.

### <Production Example 1 : synthesis of zeolite by using benzyltrimethylammonium hydroxide (SDA1)>

After dissolving NaOH in distilled water, add USY zeolite (SiO₂/Al₂O₃ molar ratio = 30) as alumina and silica source and mixed until a homogeneous solution is obtained. Benzyltrimethylammonium hydroxide (SDA1) is added to the mixed solution and stirred until a homogeneous solution is obtained. Thus, a hydrogel having the following molar composition is prepared.

SiO₂ : NaOH : SDA1 : H₂O = 1 : 0.2 : 0.2 : 22.62
The hydrogel is hydrothermally synthesized at 140 °C for 4 days to 10 days under 20 rpm to 60 rpm rotation, and the product is recovered by filtration.

### <Production Example 2 : synthesis of zeolite by using benzyltrimethylammonium chloride (SDA2)>

After dissolving NaOH in distilled water, add USY zeolite (SiO₂/Al₂O₃ molar ratio = 30) as alumina and silica source and mixed until a homogeneous solution is obtained. Benzyltrimethylammonium chloride (SDA2) is added to the mixed solution and stirred until a homogeneous solution is obtained. Thus, a hydrogel having the following molar composition is prepared.

SiO₂ : NaOH : SDA2 : H₂O = 1 : 0.4 : 0.4 : 22.62
The hydrogel is hydrothermally synthesized at 140 °C for 4 days to 10 days under 20 rpm to 60 rpm rotation, and the product is recovered by filtration.

### <Production Example 3 : synthesis of zeolite by using benzyltriethylammonium chloride (SDA3)>

After dissolving NaOH in distilled water, add USY zeolite (SiO₂/Al₂O₃ molar ratio = 30) as alumina and silica source and mixed until a homogeneous solution is obtained. Benzyltriethylammonium chloride (SDA3) is added to the mixed solution and stirred until a homogeneous solution is obtained. Thus, a hydrogel having the following molar composition is prepared.

SiO₂ : NaOH : SDA 3 : H₂O = 1 : 0.4 : 0.4 : 22.62
The hydrogel is hydrothermally synthesized at 140 °C for 4 days to 10 days under 20 rpm to 60 rpm rotation, and the product is recovered by filtration.

### <Production Example 4 : synthesis of zeolite by using benzyltrimethylammonium hydroxide (SDA1) and benzyldimethylhexadecylammonium chloride (SDA4) >

After dissolving NaOH in distilled water, add USY zeolite (SiO₂/Al₂O₃ molar ratio = 30) as alumina and silica source and mixed until a homogeneous solution is obtained. Benzyltrimethylammonium hydroxide (SDA1) and benzyldimethylhexadecylammonium chloride (SDA4) are added to the mixed solution and stirred until a homogeneous solution is obtained. Thus, a hydrogel having the following molar composition is prepared.

SiO₂ : NaOH : SDA1 : SDA4 : H₂O = 1 : 0.2 : 0.2 : 0.01 : 22.62
The hydrogel is hydrothermally synthesized at 140 °C for 4 days to 10 days under 20 rpm to 60 rpm rotation, and the product is recovered by filtration.

### <Production Example 5 : synthesis of zeolite by using benzyltrimethylammonium hydroxide (SDA1) and Na₂SO₄>

After dissolving NaOH in distilled water, add USY zeolite (SiO₂/Al₂O₃ molar ratio = 30) as alumina and silica source and mixed until a homogeneous solution is obtained. Benzyltrimethylammonium hydroxide (SDA1) and Na₂SO₄ are added to the mixed solution and stirred until a homogeneous solution is obtained. Thus, a hydrogel having the following molar composition is prepared.

SiO₂ : NaOH : SDA1 : H₂O : Na₂SO₄ = 1 : 0.2 : 0.2 : 22.62 : 0.1
The hydrogel is hydrothermally synthesized at 140 °C for 4 days to 10 days under 20 rpm to 60 rpm rotation, and the product is recovered by filtration.

### <Production Example 6 : synthesis of zeolite by using zeolite USY with SiO₂/Al₂O₃ molar ratio of 500>

After dissolving NaOH in distilled water, add USY zeolite (SiO₂/Al₂O₃ molar ratio = 500) as alumina and silica source and mixed until a homogeneous solution is obtained. Benzyltrimethylammonium hydroxide (SDA1) is added to the mixed solution and stirred until a homogeneous solution is obtained. Thus, a hydrogel having the following molar composition is prepared.

SiO₂ : NaOH : SDA 1 : H₂O = 1 : 0.3 : 0.2 : 22.62
The hydrogel is hydrothermally synthesized at 140 °C for 4 days to 10 days under 20 rpm to 60 rpm rotation, and the product is recovered by filtration.

The composition of mixtures used in examples 1 to 6 is summarized in table 1 below.

**[table 1]**

| example | hydrogel |
|---|---|
| 1 | SiO₂ : 0.2NaOH : 0.2SDA1 : 22.62H₂O |
| 2 | SiO₂ : 0.4NaOH : 0.4SDA2 : 22.62H₂O |
| 3 | SiO₂ : 0.4NaOH : 0.4SDA3 : 22.62H₂O |
| 4 | SiO₂ : 0.2NaOH : (0.2SDA1 + 0.01SDA4) : 22.62H₂O |
| 5 | SiO₂ : 0.2NaOH : 0.2SDA1 : 22.62H₂O : 0.1Na₂SO₄ |
| 6 | SiO₂ : 0.3NaOH : 0.2SDA1 : 22.62H₂O |
| | SDA1: Benzyltrimethylammonium hydroxide |
| | SDA2: Benzyltrimethylammonium chloride |
| | SDA3: Benzyltriethylammonium chloride |
| | SDA4: Benzyldimethylhexadecylammonium chloride |

### <Comparative Example>

Commercial SSZ-13 type zeolite is prepared by hydrothermal synthesis of hydrogel containing N,N,N-trialkyladamantanammonium hydroxide.

FIG. 2 shows XRD patterns and ²⁹Si NMR spectra of the zeolite prepared in Production Example 1 and the Comparative Example.

Referring to FIG. 2, SSZ-13 (Standard Oil Synthetic Zeolite-13) type zeolite is produced when USY zeolite with SiO₂/Al₂O₃ molar ratio of 30 is used.

Also, referring to FIG. 2(a), it can be seen that SSZ-13 type zeolite having excellent crystallinity is produced without using expensive SDA of adamantane series.

Referring to FIG. 2(b), it can be seen that SSZ-13 type zeolite with a high Si/Al molar ratio is synthesized through the synthesis process of Production Example 1.

Therefore, it can be confirmed that the SSZ-13 type zeolite can be produced when a SiO₂/Al₂O₃ molar ratio of raw material is 5 to 600.

As described above, the use of SDA containing a benzyl group instead of the relatively expensive SDA of adamantane series reduces the cost of raw materials. Also, the process time is shortened, so that the cost required for the hydrothermal synthesis can be reduced.

FIG. 3 is SEM images of the zeolite produced in Production Example 1, Production Example 4 and Comparative Example.

Referring to FIG. 3(a), it can be confirmed that the conventional SSZ-13 zeolite has an average particle size over 1 µm.

Referring to FIG. 3(b), it can be confirmed that the zeolite produced according to Example 1 has a nano-sized particle diameter, and particularly has an average particle size of 0.2 µm to 0.5 µm. That is, according to Example 1, a zeolite having a small particle size is produced.

Referring to FIG. 3(c), it can be seen that the zeolite prepared according to Production Example 4 has an average particle size of 0.2 µm to 1.0 µm. That is, by adding benzyldimethylhexadecylammonium with a long molecular length, zeolite having micropores and mesopores simultaneously can be obtained.

Accordingly, by further using the second SDA containing a benzyl group with an alkyl group of 8 to 20 carbon atoms, it is possible to produce a zeolite having micropores and mesopores at the same time. Thereby the diffusion of the reactant is facilitated and thus the zeolite of the present invention can be applied to various catalytic reactions.

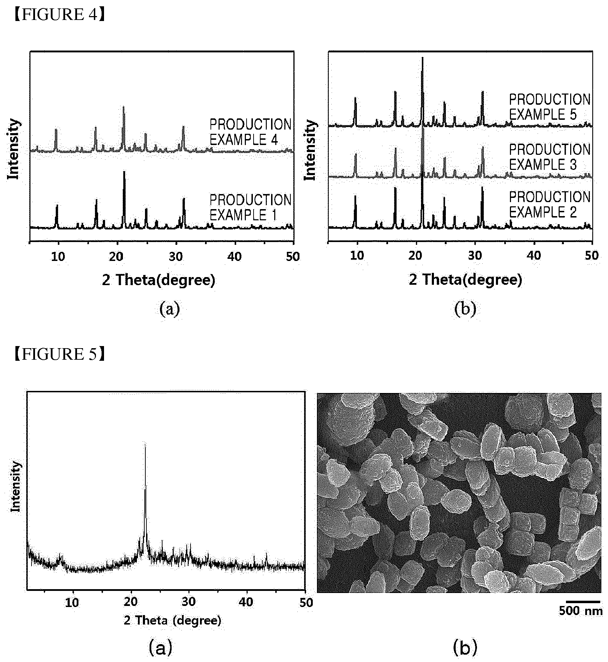

FIG. 4 is XRD patterns of the zeolite obtained in Production Example 1, Production Example 2, Production Example 3, Production Example 4 and Production Example 5.

Referring to FIG. 4, it can be seen that the zeolites prepared in Production Example 1, Production Example 2, Production Example 3, Production Example 4 and Production Example 5 have all SSZ-13 structures.

Accordingly, in accordance with a preferred embodiment of the present invention, when the zeolite is synthesized by using at least one SDA selected from the group consisting of benzyltrimethylammonium hydroxide, benzyltriethylammonium hydroxide, benzyltripropylammonium hydroxide, benzyltributylammonium hydroxide, benzyltrimethylammonium halide, benzyltriethylammonium halide, benzyltripropylammonium, and benzyltributylammonium halide, it can be seen that zeolite having the same structure can be manufactured.

On the other hand, in Production Example 5, by adding Na₂SO₄ to the hydrogel, it can be seen that the zeolite produced only for 1 to 4 days has the same structure as the zeolite obtained for 4 to 10 days.

Therefore, when a compound containing a sulfate ion is further included, the hydrothermal reaction rate is increased, and the zeolite synthesis time is shortened, thereby shortening the process time.

FIG. 5 is an XRD pattern and an SEM image of the zeolite synthesized in Production Example 6.

Referring to FIG. 5(a) and 5(b), it can be seen that when USY zeolite with a SiO₂/Al₂O₃ molar ratio of 500 is used, the type of BEA (Zeolite Beta) is produced.

Therefore, various types of zeolite including SSZ-13 type zeolite can be produced when the SiO₂/Al₂O₃ molar ratio of the USY zeolite is a specific value. In one embodiment, a BEA type zeolite (Zeolite Beta) was obtained from a raw material with a SiO₂/Al₂O₃ molar ratio of 490 to 510.

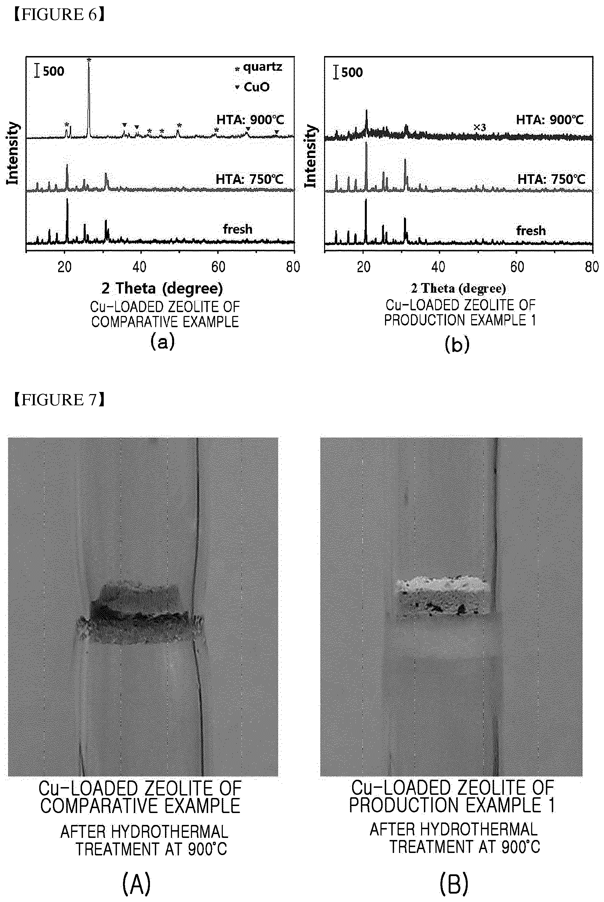

FIG. 6 is XRD patterns of copper-loaded zeolite prepared by supporting copper on the zeolite of Comparative Example and Production Example 1, respectively.

Particularly, copper is loaded in the zeolite prepared in Production Example 1 and Comparative Example, and then subjected to hydrothermal aging (HTA) at 750 °C and 900 °C, respectively. Then, the XRD patterns of the Cu-loaded zeolite without hydrothermal aging and after hydrothermal aging are compared together.

Referring to FIG. 6(a), it can be seen that the zeolite peak disappears and the quartz peak appears in the copper-loaded zeolite of Comparative Example (conventional Cu-SSZ-13) after hydrothermal aging at 900 °C.

Referring to FIG. 6 (b), it can be seen that the zeolite peak does not disappear even after the hydrothermal aging at 900 °C in the copper-loaded zeolite of Production Example 1 (Cu-SSZ-13 of the present invention).

Therefore, the zeolite prepared according to the embodiments of the present invention has a Si/Al molar ratio of 10 to 100, and excellent hydrothermal stability due to low aluminum content. Furthermore, it can be confirmed that the structural change of the zeolite does not occur even in the hydrothermal aging above 750 °C at which the structural destruction of the conventional zeolite starts. In addition, it can be confirmed that the characteristic peak of zeolite is retained even at 900 °C, at which the structure of the conventional zeolite is completely destroyed.

FIG. 7 shows images of the copper-loaded zeolite prepared by supporting copper on the zeolite of Comparative Example and Production Example 1, respectively, after hydrothermal aging.

Specifically, copper is loaded in the zeolite prepared in Production Example 1 and Comparative Example, and then hydrothermally treated at 900 °C.

Referring to FIG. 7(a) and 7(b), when the copper-loaded zeolite of Comparative Example (conventional Cu-SSZ-13) hydrothermally treated at 900 °C, the characteristics of the zeolite are lost to such an extent as to be visually distinguished. However, in the case of the copper-loaded zeolite of Production Example 1 (Cu-SSZ-13 of the present invention), it can be seen that even after the hydrothermal aging at 900 °C, the copper-loaded zeolite has a characteristic blue color.

Therefore, it can be seen that the characteristics of the zeolite are retained even after hydrothermal aging at 900 °C at which the structure of the conventional zeolite is completely destroyed.

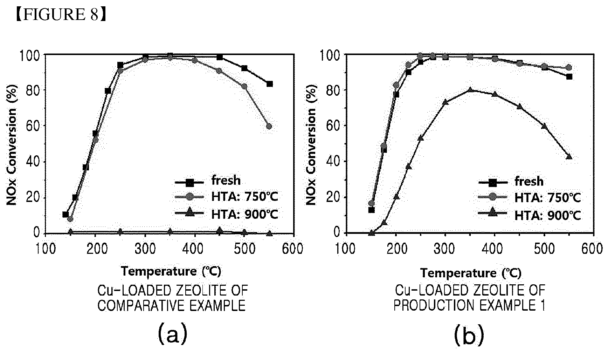

FIG. 8 is a graphs showing the SCR reaction activity of copper-loaded zeolite prepared by supporting copper on the zeolites of Comparative Example and Production Example 1, respectively.

Particularly, copper is loaded in the zeolite prepared in Production Example 1 and Comparative Example, and then subjected to hydrothermal aging (HTA) at 750 °C or 900 °C to compare with copper-loaded zeolite without hydrothermal aging (fresh).

Referring to FIG. 8(a), in the case of the copper-loaded zeolite of Comparative Example (conventional Cu-SSZ-13), the hydrothermal aging (HTA) at 750 °C slightly lowers the activity of the SCR reaction, and the conventional Cu-SSZ-13 that is hydrothermally treated at 900 °C loses the activity of the SCR reaction.

On the other hand, referring to FIG. 8(b), when hydrothermal aging (HTA) is carried out at 750 °C for the copper-loaded zeolite of Production Example 1 (Cu-SSZ-13 of the present invention), there is no change in the SCR reaction activity and the activity of the SCR reaction is retained at a relatively high level even if the hydrothermal aging (HTA) is carried out at 900 °C.

Therefore, since the zeolite of the present invention does not undergo structural change in the hydrothermal aging over 750 °C, the copper-loaded zeolite (Cu-SSZ-13 of the present invention) can be used as an SCR catalyst at a temperature over 750 °C at which the conventional Cu-SSZ-13 is deformed.

Particularly, the zeolite of the copper-loaded SSZ-13 (Cu-SSZ-13) according to an embodiment of the present invention can be confirmed that it can be used as an SCR catalyst from the temperature of 750°C at which the conventional Cu-SSZ-13 starts to decrease SCR activity to the temperature of 900°C at which the SCR activity is completely lost.

As described above, the present invention relates to a process for producing a zeolite using a structure directing agent (SDA) comprising a low-cost benzyl group, thereby reducing raw material costs and reducing processing costs.

Furthermore, various types of zeolite can be prepared by controlling the SiO₂/Al₂O₃ molar ratio of the raw material as alumina and silica source, and additional effects due to the addition of the second SDA and the compound including sulfate ion can be obtained.

On the other hand, when the conventional zeolite is hydrothermally treated at a high temperature above 750 °C, the crystal structure is collapsed and the characteristics of the zeolite are lost. In contrast, the zeolite prepared according to the present invention has improved hydrothermal stability and catalytic activity. In order to confirm improvement, the physical properties of the zeolite are estimated after the hydrothermal aging is carried out at 900 °C in the air containing H₂O of 10 %. Especially, the specific surface area showing the micropore retention of zeolite and the selective catalytic reduction performance for removing NOx which is a harmful component of exhaust gas of automobile are investigated.

## Claims

1. A method of synthesizing a zeolite comprising:
preparing a hydrogel having a first structure directing agent containing a benzyl group, a zeolite raw material, a basic material and distilled water; and
hydrothermally synthesizing the hydrogel,
wherein the zeolite raw material comprises alumina and silica, and the first structure directing agent containing the benzyl group is selected from the group consisting of hydroxides, halides, carbonates and sulphates which have benzyltrimethylammonium ion, benzyltriethylammonium ion, benzyltripropylammonium ion or benzyltributylammonium ion as cations, and wherein the hydrogel further comprises a second structure directing agent, wherein the second structure directing agent comprises at least one selected from the group consisting of hydroxides, halides, carbonates and sulphates containing a cation having the following formula, 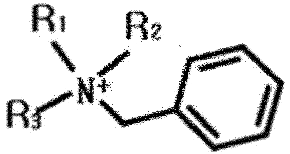
wherein R₁ is one selected from the group consisting of alkyl of C₁ to C₄, R₂ is one selected from the group consisting of alkyl of C₁ to C₄, and R₃ is one selected from the group consisting of alkyl of C₈ to C₂₀.

2. The method of claim 1, wherein the synthesized zeolite has an average particle diameter of 0.2 µm to 1.0 µm.

3. The method of claim 1, wherein the zeolite raw material has a SiO₂/Al₂O₃ molar ratio of 5 to 600.

4. The method of claim 1, wherein the synthesized zeolite is the type of SSZ-13 (Standard Oil Synthetic Zeolite-13).

5. The method of claim 3, wherein the zeolite raw material is the type of BEA (Zeolite Beta) with a SiO₂/Al₂O₃ molar ratio of 490 to 510.

6. The method of claim 1, wherein the hydrogel further comprises a sulfate ion,

## Patentansprüche

1. Verfahren zum Synthetisieren eines Zeoliths, umfassend:
Herstellen eines Hydrogels, das ein erstes Struktursteuerungsmittel mit einer Benzylgruppe, ein Zeolith-Rohmaterial, ein basisches Material und destilliertes Wasser enthält; und
hydrothermales Synthetisieren des Hydrogels,
wobei das Zeolith-Rohmaterial Aluminiumoxid und Siliziumdioxid umfasst, und das erste die Benzylgruppe enthaltende Struktursteuerungsmittel aus der Gruppe bestehend aus Hydroxiden, Halogeniden, Carbonaten und Sulfaten, die ein Benzyltrimethylammonium-Ion, Benzyltriethylammonium-Ion, Benzyltripropylammonium-Ion oder Benzyltributylammonium-Ion als Kationen aufweisen, ausgewählt ist, und
wobei das Hydrogel weiter ein zweites Struktursteuerungsmittel umfasst, wobei das zweite Struktursteuerungsmittel zumindest eine eines umfasst, das aus der Gruppe bestehend aus Hydroxiden, Halogeniden, Carbonaten und Sulfaten ausgewählt ist, die ein Kation mit der folgenden Formel enthalten: 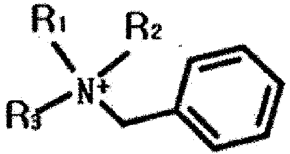
wobei R₁ aus der Gruppe bestehend aus C₁ bis C₄-Alkyl ausgewählt ist, R₂ aus der Gruppe bestehend aus C₁ bis C₄-Alkyl ausgewählt ist, und R₃ aus der Gruppe bestehend aus C₈ bis C₂₀-Alkyl ausgewählt ist.

2. Verfahren nach Anspruch 1, wobei das synthetisierte Zeolith einen mittleren Partikeldurchmesser von 0,2 µm bis 1,0 µm aufweist.

3. Verfahren nach Anspruch 1, wobei das Zeolith-Rohmaterial ein SiO₂/Al₂O₃-Stoffmengenverhältnis von 5 bis 600 aufweist.

4. Verfahren nach Anspruch 1, wobei der synthetisierte Zeolith vom Typ SSZ-13 (Standard Oil Synthetic Zeolite-13) ist.

5. Verfahren nach Anspruch 3, wobei das Zeolith-Rohmaterial vom Typ BEA (Zeolith Beta) mit einem SiO₂/Al₂O₃-Stoffmengenverhältnis von 490 bis 510 ist.

6. Verfahren nach Anspruch 1, wobei das Hydrogel weiter ein Sulfation umfasst.

## Revendications

1. Procédé de synthèse d'une zéolite comprenant :
la préparation d'un hydrogel ayant un premier agent d'orientation de structure contenant un groupe benzyle, une matière première de zéolite, une matière de base et de l'eau distillée ; et
la synthèse hydrothermique de l'hydrogel,
dans lequel la matière première de zéolite comprend de l'alumine et de la silice, et le premier agent d'orientation de structure contenant le groupe benzyle est choisi dans le groupe consistant en hydroxydes, halogénures, carbonates et sulfates qui ont un ion benzyltriméthylammonium, un ion benzyltriéthylammonium, un ion benzyltripropylammonium ou un ion benzylttributylammonium en tant que cations, et
dans lequel l'hydrogel comprend en outre un deuxième agent d'orientation de structure, dans lequel le deuxième agent d'orientation de structure comprend au moins un élément sélectionné dans le groupe consistant en les hydroxydes, les halogénures, les carbonates et les sulfates contenant un cation ayant la formule suivante, 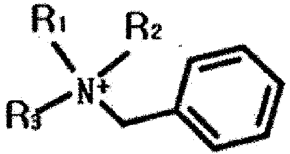
dans laquelle R₁ est un élément choisi dans le groupe consistant en un alkyle de C₁ à C₄, R₂ est un élément choisi dans le groupe consistant en un alkyle de C₁ à C₄, et R₃ est un élément choisi dans le groupe consistant en un alkyle de C₈ à C₂₀.

2. Procédé selon la revendication 1, dans lequel la zéolite synthétisée présente un diamètre de particule moyen de 0,2 µm à 1,0 µm.

3. Procédé selon la revendication 1, dans lequel la matière première de zéolite a un rapport molaire SiO₂/Al₂O₃ de 5 à 600.

4. Procédé selon la revendication 1, dans lequel la zéolite synthétisée est du type SSZ-13 (zéolite synthétique d'huile standard - 13).

5. Procédé selon la revendication 3, dans lequel la matière première de zéolite est du type BEA (zéolite bêta) avec un rapport molaire SiO₂/Al₂O₃ de 490 à 510.

6. Procédé selon la revendication 1, dans lequel l'hydrogel comprend en outre un ion sulfate.
